# EUROPÄISCHE PATENTSCHRIFT

(11) **EP 2 507 876 B1**
(45) Veröffentlichungstag und Bekanntmachung des Hinweises auf die Patenterteilung: **29.04.2015**
(21) Anmeldenummer: 10784998.6
(22) Anmeldetag: 02.12.2010
(51) Int. Cl.: H01R 39/06

(54) **VERFAHREN ZUR HERSTELLUNG EINES PLANKOMMUTATORS SOWIE PLANKOMMUTATOR**
METHOD FOR PRODUCING A PLANE COMMUTATOR AND PLANECOMMUTATOR
PROCÉDÉ DE FABRICATION D'UN COMMUTATEUR PLAN AINSI QUE CE COMMUTATEUR PLAN

(30) Priorität: 04.12.2009 DE 102009057063
(43) Veröffentlichungstag der Anmeldung: 10.10.2012
(73) Patentinhaber: Kolektor Group D.O.O., 5280 Idrija (SI)
(72) Erfinder: DRMOTA, Marjam, 5280 Idrija (SI); KUMER, Damjan, 4224 Gorenja vas (SI); JESENKO, Silvester, 5275 Godovic (SI)
(74) Vertreter: Grättinger Möhring von Poschinger Patentanwälte Partnerschaft
(86) Internationale Anmeldenummer: PCT/EP2010/007318
(87) Internationale Veröffentlichungsnummer: WO 2011/066966

(56) Entgegenhaltungen:
- DE-A1-102005 028 789
- US-A- 5 442 849
- US-A1- 2001 024 074
- US-A1- 2004 232 798
- US-A1- 2005 046 301

## Beschreibung

Die vorliegende Erfindung betrifft ein Verfahren zur Herstellung eines einen isolierendem Trägerkörper, eine Mehrzahl von Kohlenstoffsegmenten und eine Mehrzahl von mit diesen elektrisch leitend verbundenen Leitersegmenten umfassenden Plankommutators für eine dynamoelektrische Maschine, wobei die Kohlenstoffsegmente eine im wesentlichen ebene Bürstenlauffläche definieren und die Leitersegmente jeweils einen Rotorwicklungsanschluss aufweisen. Weiterhin betrifft die vorliegende Erfindung einen nach einem solchen Verfahren hergestellten Plankommutator, umfassend einen isolierendem Trägerkörper, eine Mehrzahl von gegeneinander isolierten Kohlenstoffsegmenten und eine Mehrzahl von mit diesen elektrisch leitend verbundenen Leitersegmenten, wobei die Kohlenstoffsegmente eine im wesentlichen ebene Bürstenlauffläche definieren, die Leitersegmente jeweils einen Rotorwicklungsanschluss aufweisen und der Trägerkörper radial außen, radial innen sowie an der der Bürstenlauffläche gegenüberliegenden Stirnseite der Kohlenstoffsegmente form- und stoffschlüssig an diesen anliegt.

Plankommutatoren mit Kohlenstofflauffläche sind in diversen Ausführungen bekannt. Zum einschlägigen Stand der Technik zählen insoweit insbesondere die US 5,760,518 A, WO 92/01321 A1, JP 2000208225 A, US 5,637,944 A, EP 667 657 A1, US 5,442,849 A, JP 08065967 A, US 6,667,565 B2, EP 1 524 736 B1, DE 10 2005 028 789 A1, JP 11055904 A und DE 10 2006 021 696 A1. Dabei lassen sich die bekannten Plankommutatoren mit Kohlenstofflauffläche und die zu deren Herstellung eingesetzten Verfahren im Wesentlichen in fünf Gruppen wie folgt untergliedern.

Gemäß einer ersten Gruppe von Ausführungen wird ein einheitliches Metallteil (Leiterrohling) mit dem Kunststoff umspritzt, welcher den Trägerkörper bildet. Anschließend wird der Leiterrohling an seiner Stirnfläche abgedreht, und eine Kohlenstoffringscheibe wird an den Leiterrohling, d.h. an dessen Stirnfläche angeklebt oder angelötet. Anschließend wird die Kohlenstoffringscheibe in Segmente gesägt, wobei auch der Leiterrohling in die einzelnen gegeneinander isolierten Leitersegmente getrennt wird. Bei diesem Herstellungsverfahren und den nach diesem hergestellten Plankommutatoren ist insbesondere die fehlende mechanische Verankerung der Kohlenstoffsegmente im Trägerkörper von Nachteil, die sich in einer - zumindest für verschiedene Anwendungen - nicht zufriedenstellenden Lebensdauer des betreffenden Kommutators niederschlägt. Weiterhin ist ein Schutz der im Bereich der Sägeschnitte freigelegten Metallflächen erforderlich, das Herstellungsverfahren ist aufwändig und teuer, und der Verbrauch an Metallmaterial für die Leitersegmente ist sehr hoch, was angesichts der gerade in jüngster Zeit erheblich gestiegenen Rohstoffpreise namentlich für Kupfer die entsprechenden Plankommutatoren erheblich verteuert. Nach einer zweiten Gruppe von Herstellungsverfahren wird ein den Leiterrohling bildender ganzheitlicher Metallkörper, der insbesondere mittels Brückenteilen miteinander verbundene Leitersegmente umfassen kann, auf eine vorbearbeitete Kohlenstoffringscheibe gelötet oder geklebt, so dass die beiden Teile einen elektrisch leitenden Satz bilden. Danach wird dieser Satz mit Kunststoff umspritzt, um den Trägerkörper zu formen. Es folgen die mechanische Bearbeitung der vorspringenden Teile (Brückenteile) des Metallkörpers und der Anschlusshaken für die Rotorwicklung, der Oberflächenschutz der Metallflächen (Verzinnung), die mechanische Bearbeitung der frontalen Kohleoberfläche, das Sägen der Kohlenstoffringscheibe in Kohlenstoffsegmente, das Biegen der Haken und die Bohrungsbearbeitung. In Hinblick auf die erste Gruppe von Herstellungsverfahren (s.o.) kommt es hier zu einem geringeren Verbrauch an Metallmaterial; aber die Zahl der Bearbeitungsoperationen ist ähnlich hoch. Die Verankerung der Kohlenstoffsegmente im Trägerkörper ist allerdings verbessert.

Bei der dritten Gruppe von Herstellungsverfahren (vgl. z.B. DE 10 2005 028 789 A1) wird zuerst der ganzheitliche Grundkörper aus Kunststoff spritzgegossen oder auf sonstige Weise geformt; und anschließend werden einzelne Metallsegmente, die schon eine Fertigform des Hakens haben und schon oberflächengeschützt sind, in den Trägerkörper eingesetzt. Hieran anschließend folgt das Zusammenfügen der eingesetzten Leitersegmente mit der einheitlich vorbearbeiteten Kohlenstoffringscheibe unter Zugabe von elektrisch leitendem Binder. Dann wird die Stirnseite der Kohlenstoffringscheibe gedreht und die Scheibe auf Kohlenstoffsegmente zersägt und die Bohrung bearbeitet. Bei dieser Vorgehensweise lässt sich zwar die Anzahl der Bearbeitungsoperationen gegenüber den beiden an erster und zweiter Stelle genannten Gruppen reduzieren; und auch der vergleichsweise geringe Verbrauch an Metallen für die Herstellung der Leitersegmente ist vorteilhaft. Allerdings erweisen sich die in dieser Weise hergestellten Plankommutatoren wiederum als nicht ausreichend zuverlässig, weil die Kohlenstoffsegmente schlecht verankert sind.

Bei der vierten Gruppe von Herstellungsverfahren wird pulverisiertes Graphitmaterial um den Leiterrohling herum in Form gepresst, um die Kohlenstoffsegmente zu bilden (vgl. z.B. JP 08065967 A). Ein solches Verfahren hat sich in der Praxis bisher als ungeeignet erwiesen für die Herstellung zuverlässiger, langlebiger Plankommutatoren mit Kohlenstofflauffläche.

Bei der fünften Gruppe von Herstellungsverfahren (vgl. z.B. JP 200208225 A und DE 10 2006 021 696 A1) und entsprechenden Plankommutatoren ist typisch, dass überhaupt keine metallischen Leitersegmente Verwendung finden. In diesem Falle wird typischerweise eine einheitliche Kohlenstoffringscheibe mit dem Kunststoff des Trägerkörpers umspritzt. Anschließend wird die Kohlenstoffringscheibe durch Sägeschnitte in die gegeneinander isolierten Kohlenstoffsegmente unterteilt. Da bei solchen Ausführungen das übliche Aufwickeln der Rotorwicklung um die typischerweise an den Leitersegmenten angeordneten Haken herum und ein Schweißen der Haken nicht möglich ist, lassen sich die insoweit etablierten Verfahren, die Rotorwicklung mit dem Kommutator zu verbinden, nicht anwenden. Stattdessen müssen andere Lösungen gesucht werden, wie beispielsweise die Verwendung eines gesonderten isolierenden Einsatzes, der für eine Kontaktierung der Enden der Rotorwicklung direkt an den Kohlenstoffsegmenten, gegebenenfalls unter Verwendung eines elektrisch leitenden Binders, sorgt.

Eine Sonderstellung nimmt schließlich die JP 11055904 A ein, gemäß derer einzeln vorgefertigte Kohlenstoffsegmente in einen aus Keramik bestehenden, einen Boden und einen Rand umfassenden Träger eingesetzt werden, wobei radial innen zwischen die Kohlenstoffsegmente ein ebenfalls aus Keramik bestehender Kern eingesetzt wird. Metallische Anschlusshaken ragen dabei mit einem Endabschnitt zwischen jeweils die radiale Außenfläche eines Kohlenstoffsegments und die radiale Innenfläche des Randes des Trägers. An die solchermaßen vorgefertigte Einheit mit Keramikträger, Keramikkern, Kohlenstoffsegmenten und Anschlusshaken wird anschließend mit Kunststoffmasse ein Trägerkörper angeformt, der radial außen den Rand des Keramikträgers und radial innen den Keramikkern überdeckt. Wie bei vielen der weiteren vorstehend dargelegten Verfahren zur Herstellung von Plankommutatoren, welche eine durch Kohlenstoffsegmente gebildete Bürstenlauffläche aufweisen, besteht auch hier eine den praktischen Anforderungen nicht genügende und die Lebensdauer beeinträchtigende unzureichende Verankerung der Kohlenstoffsegmente.

Im Lichte des vorstehend dargelegten Standes der Technik liegt der vorliegenden Erfindung die Aufgabe zu Grunde, ein einleitend angegebenes Verfahren zur Herstellung eines Plankommutators bereitzustellen, das sich durch eine einfache und zuverlässige Verfahrensführung sowie einen geringen Bedarf an teuren Ausgangsmaterialien auszeichnet, wobei der solchermaßen gefertigte Plankommutator sich insbesondere durch geringe Herstellungskosten sowie eine hohe Zuverlässigkeit und Langlebigkeit auszeichnen soll.

Gelöst wird diese Aufgabenstellung gemäß Anspruch 1.

Gemäß einem weiteren Aspekt der vorliegenden Erfindung wird die oben genannte Aufgabenstellung durch einen nach dem vorstehend angegebenen Verfahren hergestellten Plankommutator gelöst, der einen isolierenden Trägerkörper, eine Mehrzahl von gegeneinander isolierten Kohlenstoffsegmenten und eine Mehrzahl von mit diesen elektrisch leitend verbundenen Leitersegmenten umfasst, wobei die Kohlenstoffsegmente eine im wesentlichen ebene Bürstenlauffläche definieren, die Leitersegmente jeweils einen Rotorwicklungsanschluss aufweisen und der Trägerkörper radial außen, radial innen sowie an der der Bürstenlauffläche gegenüberliegenden Stirnseite der Kohlenstoffsegmente form- und stoffschlüssig an diesen anliegt und Aussparungen aufweist, die sich von der der Bürstenlauffläche gegenüberliegenden Oberfläche des Trägerkörpers bis zu der der Bürstenlauffläche gegenüberliegenden Oberfläche der Kohlenstoffsegmente erstrecken, wobei weiterhin jeweils ein Kontaktzapfen der Leitersegmente eine der Aussparungen durchdringt und an seinem freien Ende die der Bürstenlauffläche gegenüberliegende Oberfläche der Kohlenstoffsegmente kontaktiert.

In Kombination miteinander sind für das erfindungsgemäße Verfahren zur Herstellung eines Plankommutators, der einen isolierenden Trägerkörper, eine Mehrzahl von Kohlenstoffsegmenten und eine Mehrzahl von mit diesen elektrisch leitend verbundenen Leitersegmenten umfasst, die folgendem funktional aufeinander bezogenen Schritte bzw. Gesichtpunkte charakteristisch. Ausgangspunkt der Kohlenstoffsegmente bildet eine Kohlenstoffringscheibe; eine solche ist mit vergleichsweise geringem Aufwand in sehr guter Qualität und Homogenität herstellbar. An dieser Kohlenstoffringscheibe wird - durch Anspritzen von Kunststoffmaterial - der Trägerkörper angeformt, und zwar dergestalt, dass er radial außen, radial innen sowie an der der Bürstenlauffläche gegenüberliegenden Stirnseite der Kohlenstoffringscheibe form- und stoffschlüssig an dieser anliegt. In den Trägerkörper werden Aussparungen eingebracht, die sich von der der Bürstenlauffläche gegenüberliegenden Oberfläche des Trägerkörpers bis zu der der Bürstenlauffläche gegenüberliegenden Oberfläche der Kohlenstoffringscheibe bzw., sofern zu jedem Zeitpunkt die Kohlenstoffringscheibe bereits in einzelne Kohlenstoffsegmente vereinzelt worden ist (s.u.), der einzelnen Kohlenstoffsegmente erstrecken. Die besagten Aussparungen, deren Anzahl der Anzahl der (späteren) Kohlenstoffsegmente sowie der Leitersegmente entspricht, können dabei bereits beim Formen des Trägerkörpers gebildet werden, insbesondere indem durch entsprechende Kerne des Formwerkzeugs die den Aussparungen entsprechenden Hohlräume in dem Trägerkörper gebildet werden. Eine solche Vorgehensweise ist im Hinblick auf eine kostengünstige Herstellung des erfindungsgemäßen Plankommutators besonders vorteilhaft. Sie ist indessen nicht zwingend. Vielmehr können die besagten Aussparungen auch nachträglich in den Trägerkörper eingebracht werden (z.B. durch Bohren). Sodann werden - von Anfang an einzelne, getrennte - Leitersegmente an dem Trägerkörper angebracht, und zwar dergestalt, dass jeweils ein Kontaktzapfen des jeweiligen Leitersegments (von der der Bürstenlauffläche gegenüberliegenden Stirnseite des Trägerkörpers her) in eine der besagten Aussparungen des Trägerkörpers eingesetzt wird und diese durchdringt, so dass er an seinem freien Ende, bevorzugt mit seiner Stirnfläche, das betreffende zugeordnete Kohlenstoffsegment bzw. die Kohlenstoffringscheibe kontaktiert, und zwar bevorzugt die der Bürstenlauffläche gegenüberliegenden Oberfläche des betreffenden zugeordneten Kohlenstoffsegments bzw. der Kohlenstoffringscheibe.

Gemäß einer ersten bevorzugten Weiterbildung des erfindungsgemäßen Verfahrens zur Herstellung eines Plankommutators erfolgt das Vereinzeln der Kohlenstoffringscheibe zu isolierten einzelnen Kohlenstoffsegmenten bereits vor dem Anbringen der Leitersegmente an dem Trägerkörper. Ebenfalls ist vorteilhaft, wenn das Einbringen der Aussparungen in den Trägerkörper bereits beim Formen des Trägerkörpers erfolgt, z.B. durch Ausbildung entsprechender Hohlräume durch in das Spritzgießwerkzeug eingelegte Kerne (s.o.). Beides ist indessen nicht zwingend.

Weiterhin ist vorteilhaft, wenn, gemäß einer anderen bevorzugten Weiterbildung der Erfindung, ein Kontaktierungsmittel in die Aussparungen eingebracht wird, und zwar besonders bevorzugt vor dem Anbringen der Leitersegmente an dem Trägerkörper. Als geeignete Kontaktierungsmittel kommen dabei insbesondere ein Lötmittel und ein elektrisch leitfähiger Kleber in Betracht, wobei bei Verwendung von Lot als Kontaktierungsmittel die Kohlenstoffringscheibe zweckmäßigerweise auf ihrer der Bürstenlauffläche gegenüberliegenden Oberfläche ganz oder zumindest teilweise metallisiert ist, während sich ein elektrisch leitfähiger Kleber bei einer nicht lötbaren Kohlenstoffringscheibe als zweckmäßig erweist. Eine andere bevorzugte Weiterbildung der Erfindung zeichnet sich dadurch aus, dass das die Kohlenstoffringscheibe und den Trägerkörper umfassende Zwischenprodukt vor dem Anbringen der Leitersegmente einer technischen Alterung, insbesondere einer thermischen Alterung unterzogen wird. Alternativ oder kumulativ kann das die Kohlenstoffringscheibe bzw. die bereits vereinzelten Kohlenstoffsegmente, den Trägerkörper, die Leitersegmente und ggf. ein Kontaktierungsmittel umfassende Zwischenprodukt wärmebehandelt werden, um beständige, stabile elektrische Verbindungen zwischen der Kohle und den Leitersegmenten zu sichern. Beide Verfahrensvarianten wirken sich günstig auf die Lebensdauer und die dauerhafte Zuverlässigkeit des nach dem erfindungsgemäßen Verfahren hergestellten Plankommutators aus.

Ebenfalls im Hinblick auf eine hohe Zuverlässigkeit des Plankommutators ist besonders vorteilhaft, wenn die Kohlenstoffringscheibe im Bereich ihres äußeren und/oder ihres inneren Umfangsrandes gestuft profiliert und/oder gezahnt ist. Besonders günstig ist dabei eine solche Profilierung, bei der der Trägerkörper und die Kohlenstoffsegmente hinterschnitten ineinandergreifen. Insbesondere dann, wenn die Kontaktzapfen mit ihren Stirnflächen die der Bürstenlauffläche gegenüberliegende Stirnfläche der Kohlenstoffsegmente kontaktieren, weist letztere bevorzugt eine Ringnut auf. All diese Maßnahmen führen zu einer verbesserten formschlüssigen Verzahnung der Kohlenstoffringscheibe mit dem an diese angeformten Trägerkörper mit dem Ergebnis einer verbesserten Fixierung der Kohlenstoffsegmente in diesem in axialer Richtung, in Umfangsrichtung bzw. in radialer Richtung.

Eine besonders zuverlässige und langlebige Kontaktierung der Kontaktzapfen mit den Kohlenstoffsegmenten lässt sich erreichen, indem die Kohlenstoffringscheibe an ihrer der Bürstenlauffläche gegenüberliegenden Stirnseite stutzenförmige Vorsprünge aufweist, in die die Kontaktzapfen der an dem Trägerkörper angebrachten Leitersegmente mit ihren freien Enden eindringen. Hierzu können die Kontaktzapfen insbesondere verjüngte Kontaktsspitzen aufweisen. Dies ist namentlich von Vorteil, wenn die Aussparungen, gemäß einer weiteren bevorzugten Weiterbildung der Erfindung nach dem Anbringen der Leitersegmente an dem Trägerkörper zumindest teilweise mit einem Schutz- und/oder Dichtmittel (z.B. ein Kunstharz) verfüllt werden, welches die Kontaktzonen zwischen den Kohlenstoffsegmenten und dem jeweils zugeordneten Kontaktzapfen zuverlässig vor dem Medium, in dem der betreffende Kommutator betrieben wird, abschirmt.

Weitere besonders bevorzugte Weiterbildungen der Erfindung betreffen die Gestaltung der Leitersegmente und deren funktionale Interaktion mit dem Trägerkörper. Die Leitersegmente weisen neben dem Kontaktzapfen bevorzugt eine Basis und ein Brückenteil, welches den Kontaktzapfen mit der Basis verbindet, auf, wobei sich durch die Anordnung von Basis, Brückenteil und Kontaktzapfen eine im Wesentlichen U-förmige Gestalt im Axialschnitt ergibt. Die Brückenteile sind dabei bevorzugt in Vertiefungen des Trägerkörpers, die sich an dessen der Bürstenlauffläche gegenüberliegenden Stirnseite zu jeweils einer zugeordneten Aussparung erstrecken, aufgenommen.

Die Basis jedes Leitersegments ist dabei bevorzugt in einer zugeordneten Tasche des Trägerkörpers aufgenommen, wobei die Basis der Leitersegmente und die jeweils zugeordnete Tasche besonders bevorzugt formschlüssig ineinandergreifen. Besonders vorteilhaft ist es, wenn die Brückenteile jeweils in Form eines flachen, insbesondere radial ausgerichteten Verbindungsstegs ausgeführt sind, der in Umfangsrichtung schmaler ausgeführt ist als die Basis und der Kontaktzapfen. Für einen guten Halt der Leitersegmente ist dabei weiterhin günstig, wenn die Basis und der Kontaktzapfen beidseits des Verbindungsstegs mit Anlageflächen an korrespondierenden Stützflächen der zugeordneten Tasche bzw. Aufnahme des Trägerkörpers anliegen. Für einen guten Kraftfluss innerhalb des Leitersegments, eine Selbstzentrierung der Leitersegmente und eine einfache Montage der Leitersegmente ist dabei weiterhin von Vorteil, wenn die genannten, zueinander korrespondierenden Stütz- und Anlageflächen paarweise in Richtung auf den Verbindungssteg keilförmig konvergieren.

Eine andere besonders bevorzugte Weiterbildung zeichnet sich dadurch aus, dass radial innen an der Basis eine Rippe angeformt ist, die in axialer Richtung auf die Bürstenlauffläche gegenüber der Basis vorspringt, wobei der entsprechende, durch die Rippe gebildete axiale Fortsatz dergestalt in eine zugeordnete Aussparung des Trägerkörpers eingreift, dass er radial außen von dem Trägerkörper überdeckt ist. Auf diese Weise wird das jeweilige Leitersegment auch bei hohen Drehzahlen des mit dem Kommutator ausgestatteten Rotors und entsprechend hohen Fliehkräften an seiner Basis sicher in radialer Richtung fixiert. Die besagte Rippe kann dabei insbesondere an ihrem dem axialen Fortsatz gegenüberliegenden Endabschnitt in das als Verbindungssteg ausgeführte Brückenteil übergehen und insoweit zu einer Aussteifung beitragen.

Eine andere bevorzugte Möglichkeit, die Leitersegmente jeweils im Bereich ihrer Basis zuverlässig in dem Trägerkörper zu fixieren, besteht in einer hinterschnittenen Gestaltung des Formschlusses zwischen der Basis und der zugeordneten Aufnahme, beispielsweise über eine schwalbenschwanzförmige Querschnittsprofilierung.

Gemäß einer abermals anderen bevorzugten Weiterbildung der Erfindung ist radial außen an dem Kontaktzapfen eine Rippe angeformt, die in eine korrespondierende Aussparung des Trägerkörpers eingreift. Diese Rippe erstreckt sich besonders bevorzugt im Wesentlich über die gesamte axiale Höhe des Kontaktzapfens, so dass sie in das als Verbindungssteg ausgeführte Brückenteil übergehen und insoweit zu einer Aussteifung des Leitersegments beitragen kann.

Durch eine vorstehend mehrfach angesprochene Aussteifung des Leitersegments mittels der Rippen an der Basis bzw. an dem Kontaktzapfen kann das Brückenteil einen relativ kleinen Querschnitt aufweisen. Dies unterbindet einen allzu großen Wärmefluss von der Basis zu dem Kontaktzapfen, so dass selbst dann, wenn die Rotorwicklung an die Anschlusshaken angeschweißt wird, eine Lötverbindung der Kontaktzapfen mit den Kohlenstoffsegmenten keinen Schaden nimmt.

Die weiter oben angesprochenen, die Basis der Leitersegmente aufnehmenden Taschen weisen bevorzugt im Bereich ihres Bodens einen Einstich mit einem radial innen angeordneten tangentialen Abschnitt und zwei radiale Abschnitte auf. Dies lässt eine exakte Positionierung der Leitersegmente in den zugeordneten Taschen selbst dann zu, wenn die jeweilige Basis sehr stramm in der Tasche sitzt und beim Einsetzen der Basis in die Tasche etwas Trägerkörpermaterial abgeschabt wird; denn dieses Material findet in dem Einstich Platz und behindert nicht das Einsetzen der Basis bis zu dem vorgegebenen Anschlag. Der Rotorwicklungsanschluss (z.B. Haken) ist bevorzugt an der vorstehend erläuterten Basis der Leitersegmente angeordnet, und zwar besonders bevorzugt außermittig zu dieser. Letzteres ist günstig für eine optimale Verbindung der Rotorwicklung mit dem jeweils zugeordneten Rotorwicklungsanschluss durch Biegen der Haken und Schweißen, ohne die Verbindung der Kontaktzapfen mit den Kohlenstoffsegmenten zu schädigen. Insoweit ist unter Gesichtspunkten der Wärmeverteilung beim Schweißen der Rotorwicklung auch günstig, wenn die Querschnittsfläche der Basis in einer zur Kommutatorachse senkrechten Ebene größer ist als die Querschnittsfläche des Kontaktzapfens.

Die weiter oben bereits eingehend erläuterten Brückenteile können auch in gewissem Umfang in axialer Richtung federnd nachgiebig ausgeführt sein und im Wesentlichen in einer zur Kommutatorachse senkrechten Ebene verlaufen. Zudem können die Brückenteile in den Vertiefungen des Trägerkörpers, die sich an dessen der Bürstenlauffläche gegenüberliegenden Stirnseite zu jeweils einer zugeordneten Aussparung erstrecken, mit Spiel aufgenommen sein. Durch die vorstehenden Maßnahmen wird ein Toleranzausgleich begünstigt, der seinerseits den zuverlässigen stirnseitigen Kontakt der Kontaktzapfen mit den Kohlenstoffsegmenten begünstigt. Weiterhin können die Brückenteile eine von der radialen Ausrichtung abweichende Orientierung aufweisen. Auch dies ist von Vorteil für einen Toleranzausgleich zwischen Trägerkörper und Leitersegment und begünstigt auf diese Weise einen guten Halt der Leitersegmente in dem Trägerkörper.

Verschiedene weitere ergänzende Maßnahmen wirken sich ebenfalls günstig auf die Lebensdauer des Plankommutators nach der vorliegenden Erfindung aus. Hierzu zählen beispielsweise die folgenden, einzeln oder in Verbindung miteinander anwendbaren Maßnahmen: Die Kontaktzapfen der Leitersegmente füllen die Querschnitte der zugeordneten Aussparungen jeweils nur teilweise aus, insbesondere nur zu maximal 60%, besonders bevorzugt nur zu maximal 40%; dies ist günstig für eine zwängungsfreie Montage der Leitersegmente, erlaubt eine optische Kontrolle der Verbindung der Kontaktzapfen mit den Kohlenstoffsegmenten und begünstigt das Verfüllen der Aussparungen nach dem Anbringen der Leitersegmente mit einem Schutz und/oder Dichtmittel (s.o.). Für eine präzise aber zwängungsfreie Positionierung der Kontaktzapfen in den zugeordneten Aussparungen des Trägerkörpers ist dabei besonders günstig, wenn jeder Kontaktzapfen jeweils radial innen eine sich im Wesentlichen in axialer Richtung erstreckende Rippe aufweist, die an der gegenüberliegenden Oberfläche der den Kontaktzapfen aufnehmenden Aussparung anliegt, oder aber, in alternativer Ausgestaltung, die Oberfläche der den Kontaktzapfen aufnehmenden Aussparung radial innen eine sich im Wesentlichen in axialer Richtung erstreckende Rippe aufweist, an der der Kontaktzapfen mit seiner gegenüberliegenden Oberfläche anliegt.

Als Alternative zu der weiter oben bereits erläuterten Gestaltung der Kontaktzapfen können diese auch einen polygonalen Querschnitt aufweisen und längs Kanten an der inneren Oberfläche der jeweils zugeordneten Aussparung anliegen; dies kann im Einzelfall das mechanische Verklemmen der Leitersegmente an dem Trägerkörper begünstigen. Ein solcher polygonaler Querschnitt der Kontaktzapfen ist indessen, wie dargelegt, keineswegs zwingend; gute Ergebnisse lassen sich vielmehr auch mit runden bzw. abgerundeten Querschnittsformen der Kontaktzapfen erreichen.

Im Folgenden werden bevorzugte Ausführungsbeispiele der vorliegenden Erfindung anhand der nachstehend erläuterten Zeichnungen veranschaulicht. Dabei zeigt
- Fig. 1: einen in Anwendung der vorliegenden Erfindung hergestellten Plankommutator in perspektivischer Ansicht von oben,
- Fig. 2: den Plankommutator nach Fig. 1 in perspektivischer Ansicht von unten,
- Fig. 3: den Plankommutator nach den Fig. 1 und 2 in Draufsicht,
- Fig. 4: einen Axialschnitt durch den Plankommutator nach den Fig. 1 bis 3 entlang der Linie IV-IV in Fig. 3,
- Fig. 5: ein Detail der Fig. 4 in vergrößerter Ansicht,
- Fig. 6: einen zur Kommutatorachse normalen Schnitt durch den Plankommutator nach den Fig. 1 bis 5 entlang der Linie VI-VI der Fig. 4 in vergrößerter Darstellung und
- Fig. 7: in perspektivischer Ansicht die bei der Herstellung des Plankommutators nach den Fig. 1 bis 6 verwendete Kohlenstoffringscheibe. Weiterhin zeigt
- Fig. 8: in perspektivischer Ansicht die bei der Herstellung der in den Fig. 9 und 10 veranschaulichten weiteren Ausführungsbeispiele erfindungsgemäßer Plankommutatoren verwendete Kohlenstoffringscheibe
- Fig. 9: einen teilweisen Axialschnitt durch ein zweites Ausführungsbeispiel eines Plankommutators nach der vorliegenden Erfindung und
- Fig. 10: einen teilweisen Axialschnitt durch ein drittes Ausführungsbeispiel eines Plankommutators nach der vorliegenden Erfindung. Und schließlich zeigt
- Fig. 11: einen anderen in Anwendung der vorliegenden Erfindung hergestellten Plankommutator in perspektivischer Ansicht von oben,
- Fig. 12: den Plankommutator nach Fig. 11 in Draufsicht,
- Fig. 13: einen Axialschnitt durch den Plankommutator nach den Fig. 11 und 12 entlang der Linie X-X in Fig. 12,
- Fig. 14: einen zur Kommutatorachse normalen Schnitt durch den Plankommutator nach den Fig. 11 bis 13 entlang der Linie Y-Y der Fig. 13,
- Fig. 14a: ein Detail der Fig. 14 in vergrößerter Darstellung,
- Fig. 15: einen zur Kommutatorachse normalen Schnitt durch den Plankommutator nach den Fig. 11 bis 13 entlang der Linie Z-Z der Fig. 13,
- Fig. 15a: ein Detail der Fig. 15 in vergrößerter Darstellung,
- Fig. 16: die den Trägerkörper und die Kohlenstoffsegmente (nach dem Vereinzeln der Kohlenstoffringscheibe in einzelne Kohlenstoffsegmente) umfassende Einheit des Plankommutators nach den Fig. 11 bis 15 in perspektivischer Ansicht von oben
- Fig. 17: das Leitersegment des Plankommutators nach den Fig. 11 bis 15 aus zwei unterschiedlichen Blickrichtungen,
- Fig. 18: die den Trägerkörper und die Kohlenstoffsegmente (nach dem Vereinzeln der Kohlenstoffringscheibe in einzelne Kohlenstoffsegmente) umfassende Einheit einer gegenüber dem Plankommutator nach den Fig. 11 bis 17 abgewandelten Ausführungsform und
- Fig. 19: das Leitersegment eines die Einheit nach Fig. 18 aufweisenden Plankommutators.

Der in der Zeichnung veranschaulichte Plankommutator umfasst einen isolierenden Trägerkörper 1, acht gegeneinander isolierte Kohlenstoffsegmente 2, welche eine im wesentlichen ebene, auf der Kommutatorachse 3 senkrecht stehende Bürstenlauffläche 4 definieren, und acht mit den Kohlenstoffsegmenten 2 elektrisch leitend verbundene Leitersegmente 5. Jedes der Leitersegmente 5 weist einen Rotorwicklungsanschluss 6 in Form eines Hakens 7 auf.

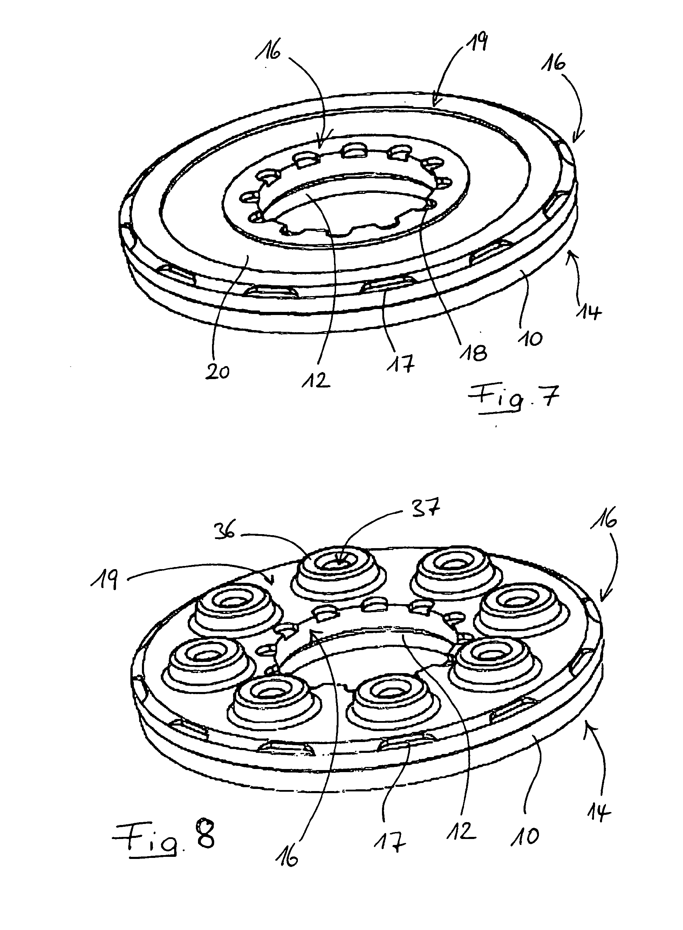

Der Trägerkörper 1, der in bekannter Weise eine zentrische Bohrung 8 zur Montage des Plankommutators auf der Rotorwelle einer dynamoelektrischen Maschine aufweist, liegt form- und stoffschlüssig mit einem äußeren Kragen 9 an der radial äußeren Umfangsfläche 10 und mit einem inneren Kragen 11 an der radial inneren Umfangsfläche 12 der Kohlenstoffsegmente 2 an. Weiterhin liegt der Trägerkörper 1 form- und stoffschlüssig auch an der der Bürstenlauffläche 4 gegenüberliegenden Stirnseite 13 der Kohlenstoffsegmente 2 an. Erreicht wird dies, indem der Trägerkörper 1 an die Kohlenstoffringscheibe 14 (Fig. 7), aus der die Kohlenstoffsegmente 2 durch spätere Unterteilung (Vereinzelung) mittels radialer Sägeschnitte 15 hervorgehen, angespritzt wird. Die spezifische Profilierung der Kohlenstoffringscheibe 14, nämlich die gestuft profilierte Ausführung der Kohlenstoffringscheibe 14 im Bereich ihrer äußeren Umfangsfläche 10 sowie ihrer inneren Umfangsfläche 12 mit einer stufenförmigen Zunahme der radialen Erstreckung der Kohlenstoffringscheibe in der Richtung weg von der Bürstenlauffläche 4, resultiert aufgrund der korrespondierenden Hinterschneidung des Trägerkörpers 1 in einer zuverlässigen axialen Fixierung der Kohlenstoffsegmente 2 in dem Trägerkörper 1. Eine zuverlässige tangentiale Fixierung der Kohlenstoffsegmente 2 in dem Trägerkörper 1 wird durch eine gezahnte Ausführung der äußeren Umfangsfläche 10 sowie der inneren Umfangsfläche 12 der Kohlenstoffringscheibe 14 bzw. der aus ihr hervorgehenden Kohlenstoffsegmente 2 erreicht, indem korrespondierende Vorsprünge des an die Kohlenstoffringscheibe 14 angeformten Trägerkörpers 1 in die die Verzahnungen 16 bildenden Aussparungen 17 bzw. 18 der Kohlenstoffringscheibe 14 eingreifen. Eine sich auf der der Bürstenlauffläche 4 gegenüberliegenden Oberfläche 19 der Kohlenstoffringscheibe 14 in Umfangsrichtung erstreckende Ringnut 20, in welche der an die Kohlenstoffringscheibe 14 angespritzte Trägerkörper mit einem korrespondierenden ringförmigen Vorsprung 22 eingreift, begünstigt die radiale Fixierung der Kohlenstoffsegmente 2 in dem Trägerkörper 1.

Der Trägerkörper 1 weist acht zueinander und zu der Kommutatorachse 3 parallele, im Wesentlichen kreiszylindrische Aussparungen 23 auf, die sich von der der Bürstenlauffläche 4 gegenüberliegenden Oberfläche 24 des Trägerkörpers 1 bis zu der der Bürstenlauffläche 4 gegenüberliegenden Oberfläche 19 der Kohlenstoffsegmente 2 erstrecken. Am Grund der Aussparungen 23 liegt die Oberfläche 19 der Kohlenstoffsegmente 2 frei und steht für eine Kontaktierung der Leitersegmente 5 zur Verfügung.

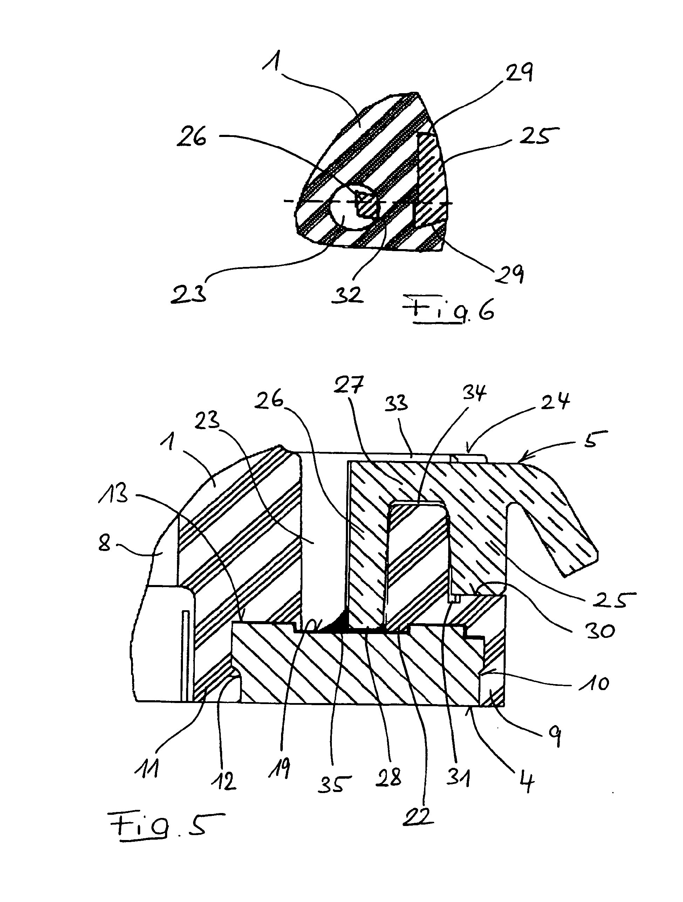

Jedes Leitersegment 5 umfasst als wesentliche Abschnitte eine Basis 25, einen Kontaktzapfen 26 und ein den Kontaktzapfen 26 mit der Basis 25 verbindendes Brückenteil 27. Die Kontaktzapfen 26 der Leitersegmente 5 durchdringen jeweils die zugeordnete Aussparung 23 und kontaktieren mit ihrer Stirnfläche 28 die der Bürstenlauffläche 4 gegenüberliegende Oberfläche 19 der Kohlenstoffsegmente 2. Die Basis 25 jedes Leitersegments 5 ist jeweils in einer korrespondierenden Tasche 29 des Trägerkörpers 1 aufgenommen, wobei die Basis 25 und die jeweils zugeordnete Tasche 29 über eine schwalbenschwanzförmige Querschnittprofilierung (vgl. Fig. 6) formschlüssig ineinandergreifen. An ihrem Boden 30 weisen die Taschen 29 radial innen sowie sich radial zur Außenfläche des Trägerkörpers erstreckend einen Einstich 31 auf.

Die Kontaktzapfen 26 sitzen nicht stramm in den zugeordneten Aussparungen 23; vielmehr füllen sie die Querschnitte der Aussparungen 23 jeweils nur teilweise aus, nämlich zu weniger als 50% (s. Fig. 6). Sie weisen überdies eine von der Querschnittsform der Aussparungen 23 abweichende Querschnittsform auf; denn während die Aussparungen 23 einen runden Querschnitt aufweisen, ist der Querschnitt der Kontaktzapfen 26 polygonal. Im Ergebnis liegen die Kontaktzapfen 26 längs Kanten 32 an der inneren Oberfläche der jeweils zugeordneten Aussparung 23 an. Die Querschnittsfläche der Kontaktzapfen 26 in einer zur Kommutatorachse 3 senkrechten Ebene ist erheblich kleiner als die Querschnittsfläche der jeweils zugeordneten Basis 25 des Leitersegments 5.

Der Haken 7 ist an der Basis 25 angeformt, und zwar außermittig. Ebenfalls außermittig zu der Basis 25 ist das Brückenteil 27 mit dieser verbunden. Die Brückenteile 27 verlaufen im Wesentlichen in einer zur Kommutatorachse 3 senkrechten Ebene, und zwar mit einer von der radialen Ausrichtung geringfügig abweichende Orientierung. Sie sind in Vertiefungen 33 aufgenommen sind, die sich an der der Bürstenlauffläche gegenüberliegenden Stirnseite 24 des Trägerkörpers 1 jeweils von einer Tasche 29 zu einer zugeordneten Aussparung 23 erstrecken. Die Brückenteile sind federnd nachgiebig ausgeführt und haben zudem gewisses Spiel 34 in der jeweils zugeordneten Vertiefung 33, so dass sich ein Toleranzausgleich ergibt, der den zuverlässigen stirnseitigen Kontakt der Kontaktzapfen 26 mit den Kohlenstoffsegmenten 2 begünstigt.

Am Grund der Aussparungen 23 ist auf die Oberfläche der Kohlenstoffsegmente 2 ein elektrisch leitfähiger Kleber 35 aufgebracht, der für einen dauerhaft zuverlässigen Kontakt der Kontaktzapfen 26 mit den Kohlenstoffsegmenten 2 sorgt.

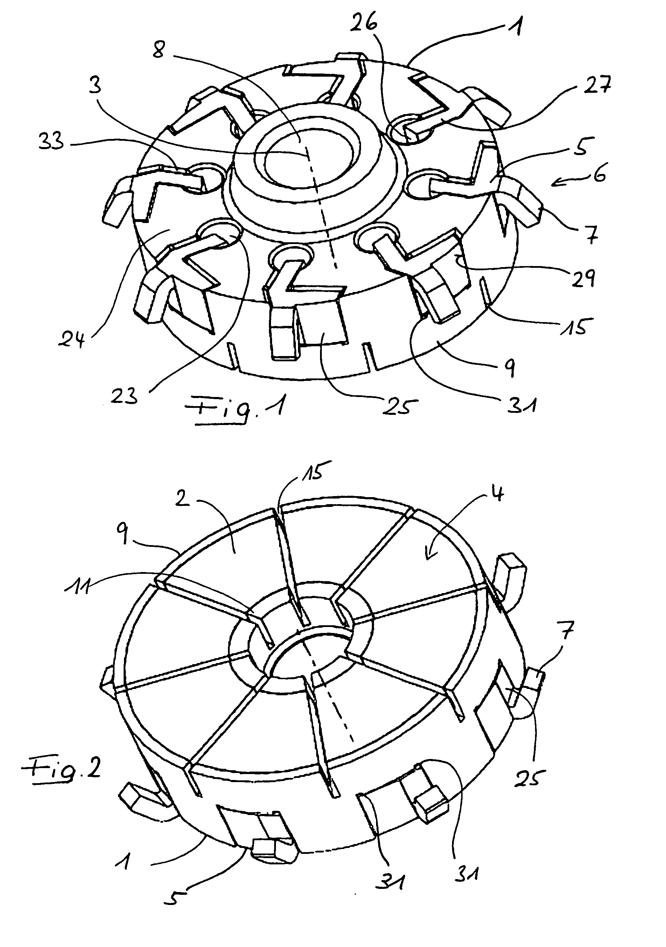

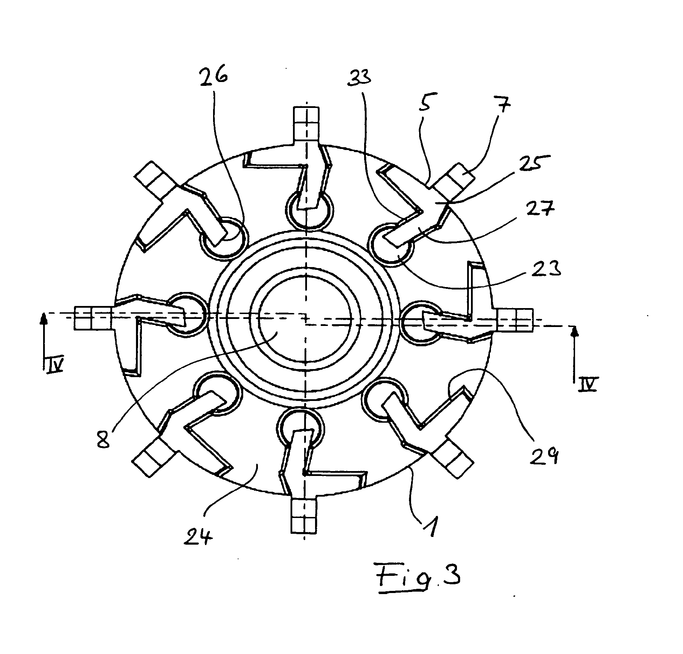

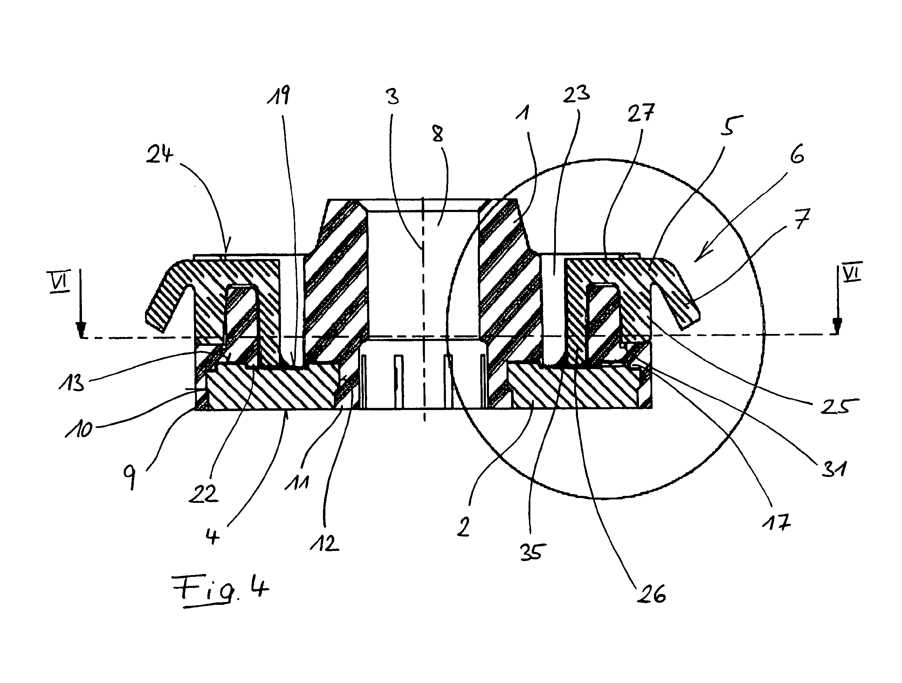

Die Herstellung des Plankommutators nach den Fig. 1 bis 7 erschließt sich im Wesentlichen bereits aus den vorstehenden Erläuterungen der vorliegenden Erfindung. Erwähnenswert erscheint insoweit lediglich, dass die Aussparungen 23 nicht nur schon beim Spritzen des Trägerkörpers 1 in diesem ausgebildet werden können, sondern dass auch eine spätere Herstellung der Aussparungen (z.B. durch Bohren) möglich ist. Weiterhin können die Sägeschnitte 15, die der Vereinzelung der Kohlenstoffringscheibe 14 in die einzelnen, zueinander isolierten Kohlenstoffsegmente 2 dienen, bereits vor oder aber nach dem Anbringen der Leitersegmente 5 an dem Trägerkörper 1 eingebracht werden.

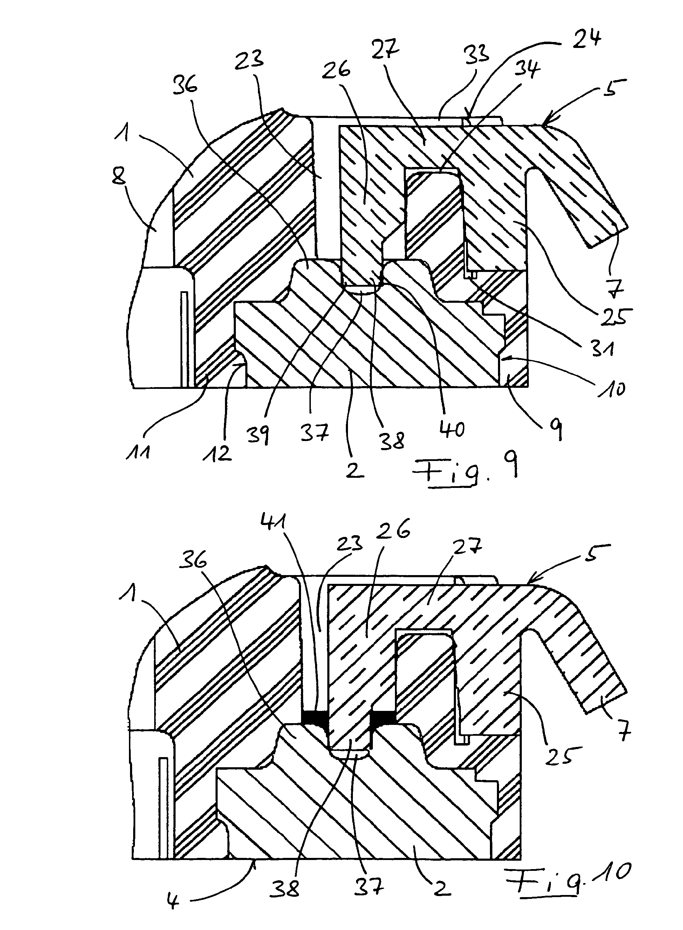

Die in Fig. 8 veranschaulichte Kohlenstoffringscheibe 14 weist, abweichend von der Kohlenstoffringscheibe 14 nach Fig. 7, an ihrer der Bürstenlauffläche 4 gegenüberliegenden Oberfläche 19 nicht eine Ringnut auf, sondern vielmehr acht stutzenförmige Vorsprünge 36. Diese bilden jeweils einen Aufnahmehohlraum 37 für die in sie eingreifenden, als verjüngte Kontaktspitzen 38 ausgeführten Endabschnitte der Kontaktzapfen 26 der Leitersegmente 5 aus (vgl. Fig. 9 und 10). Die Aufnahmehohlräume 37 sind dabei so dimensioniert, dass die Kontaktzapfen 26 im Bereich ihrer die Stirnfläche 28 begrenzenden Kante 39 unter bleibender Verformung des Kohlenstoffmaterials geringfügig in dieses eindringen, so dass sich bleibende, zuverlässige ringförmige Kontaktzonen 40 ergeben.

In Fig. 10 ist veranschaulicht, dass nach dem Anbringen der Leitersegmente 5 an dem Trägerkörper 1 die Aussparungen 23 zumindest teilweise mit einem Schutz- und/oder Dichtmittel 41 verfüllt sind, welches die Kontaktzonen 40 zuverlässig vor dem Medium abschirmt, in dem der betreffende Kommutator betrieben wird. Die Dicht- und Schutzwirkung ist besonders ausgeprägt, wenn die Kontaktzapfen, wie in den Fig. 9 und 10 veranschaulicht, endseitig zu Kontaktspitzen 38 verjüngt sind. zwingend ist dies indessen nicht, so dass ein zumindest teilweises Verfüllen des Aussparungen 23 mit einem Schutz- und/oder Dichtmittel auch bei der Ausführungsform nach den Fig. 1 bis 7 vorteilhaft ist.

Im Übrigen erhellen gelten für die Ausführungsformen nach den Fig. 8 bis 10 die vorstehenden Erläuterungen der Fig. 1 bis 7, so dass zur Vermeidung von Wiederholungen auf diese verwiesen wird.

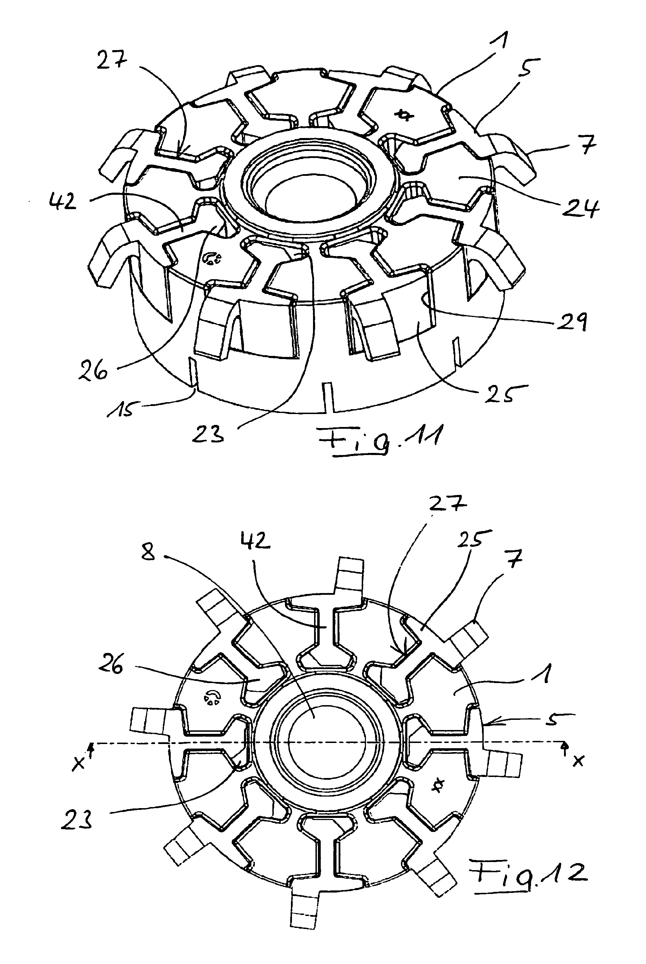

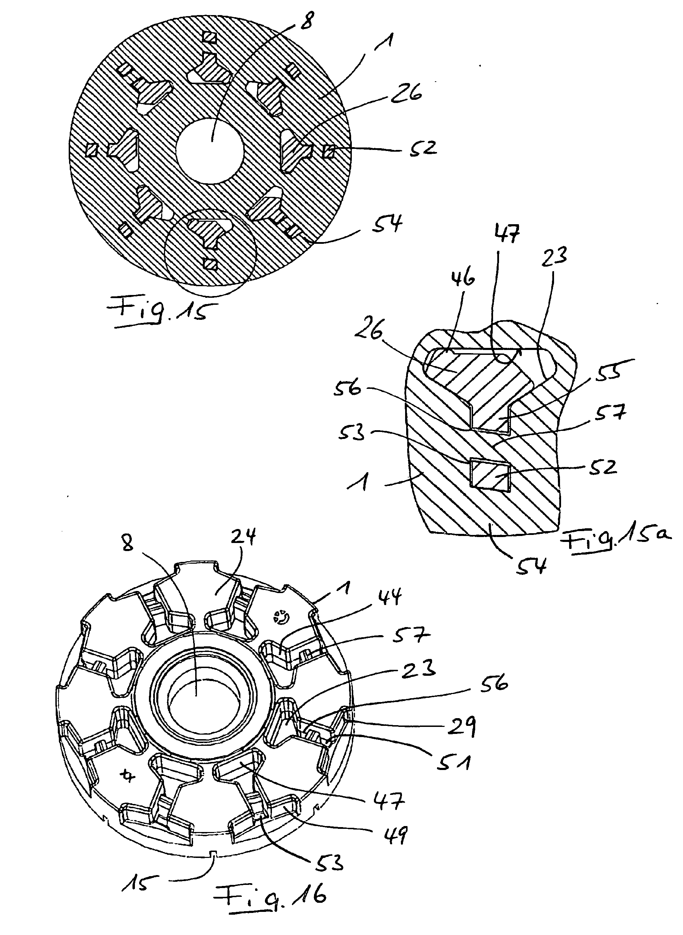

Die in den Fig. 11 bis 19 veranschaulichten Ausführungsbeispiele weichen in den nachstehend dargelegten Aspekten von den zuvor beschriebenen Ausführungsformen ab, stimmen im Übrigen indessen zumindest im Wesentlichen mit letzteren überein, so dass - wiederum zur Vermeidung von Wiederholungen - insoweit auf die vorstehenden Erläuterungen der Ausführungsbeispiele nach den Fig. 1 bis 10 verweisen wird.

Eine wesentliche Abweichung der Plankommutatoren gemäß den Fig. 11 bis 17 einerseits und 18 und 19 andererseits gegenüber den weiter oben beschriebenen Ausführungsformen besteht darin, dass hier die Brückenteile 27 der Leitersegmente 5 jeweils in Form eines Verbindungsstegs 42 ausgeführt sind, der in Umfangsrichtung schmaler ausgeführt ist als die Basis 25 und der Kontaktzapfen 26. Oder mit anderen Worten: Bei dieser Ausführungsform hat nicht nur die Basis 25 in Umfangsrichtung eine größere Erstreckung als das Brückenteil 27, sondern vielmehr auch der Kontaktzapfen 26. Letzterer ist im Übrigen nicht scharfkantig polygonal gestaltet und in einer Aussparung mit rundem Querschnitt aufgenommen, sondern weist vielmehr einen unregelmäßigen Querschnitt mit abgerundeten Kanten auf. Der Querschnitt der Kontaktzapfen 26 ist dabei dergestalt an die Querschnittsform der Aussparungen 23 angepasst, dass der Kontaktzapfen beidseits des Verbindungsstegs 42 mit Anlageflächen 43 an korrespondierenden Stützflächen 44 der zugeordneten Aussparung 23 des Trägerkörpers 1 anliegt. Die beiden Stützflächen 44 konvergieren dabei keilförmig in Richtung auf den Verbindungssteg 42. Der Kontaktzapfen 26 füllt, wie ersichtlich, die Aussparung 23 nicht vollständig aus; vielmehr besteht ein Freiraum 45, durch den hindurch z.B. die Verbindungsstelle des Kontaktzapfens 26 mit der Oberfläche des jeweils zugeordneten Kohlenstoffsegments 2 inspiziert werden kann. Erkennbar ist weiterhin der radial innen an dem Kontaktzapfen 26 angeordnete, sich in axialer Richtung erstreckende erhabene Wulst 46, der an der gegenüberliegenden Oberfläche 47 der den Kontaktzapfen 26 aufnehmenden Aussparung 23 anliegt. Der Wulst 46 bildet bei dieser Ausführungsform den einzigen Kontakt des Kontaktzapfens 26 mit der radial innen angeordneten Oberfläche 47 der Aussparung 23.

Auch die Basis 25 liegt beidseits des Verbindungsstegs 42 mit Anlageflächen 48 an korrespondierenden Stützflächen 49 der zugeordneten Tasche 29 des Trägerkörpers 1 an. Auch die Stützflächen 49 des Trägerkörpers 1 und die Anlageflächen 48 der Basis 25 des Leitersegments 5 konvergieren keilförmig in Richtung auf den Verbindungssteg 42, allerdings mit einem größeren Keilwinkel als im Bereich des Kontaktzapfens 26.

Weiterhin ist radial innen an der Basis 25 des Leitersegments 5 eine Rippe 50 angeformt. Diese erstreckt sich ausgehend von dem Verbindungssteg 42 über die gesamte axiale Länge der Basis 25, greift in eine korrespondierende Kehle 51 des Trägerkörpers 1 ein und springt in axialer Richtung auf die Bürstenlauffläche 4 gegenüber der Basis 25 vor. Der entsprechende axiale Fortsatz 52 greift dabei dergestalt in eine zugeordnete Aussparung 53 des Trägerkörpers 1 ein, dass er insbesondere auch radial außen von dem Trägerkörper überdeckt ist (vgl. die Überdeckung 54).

Radial außen an dem Kontaktzapfen 26 ist eine Rippe 55 angeformt, die sich ausgehend von dem Verbindungssteg 42 über die gesamte axiale Länge des Kontaktzapfens 26 erstreckt und in eine korrespondierende, in der Aussparung 26 eingeformte Kehle 56 eingreift. In dem Trägerkörper 1 ist zwischen den beiden Kehlen 51 und 56 ein Steg 57 ausgebildet, der in eine zwischen den Rippen 50 und 55 des Leitersegments 5 ausgebildete Kerbe 58 eingreift. Die in der Zeichnung erkennbare, allerdings nicht zwingend vorgesehene Schrägstellung des Stegs 57 steht hier in einem sachlichen Zusammenhang damit, dass der Anschlusshaken 7 an der Basis 25 des Leitersegments 5 außermittig angeordnet ist.

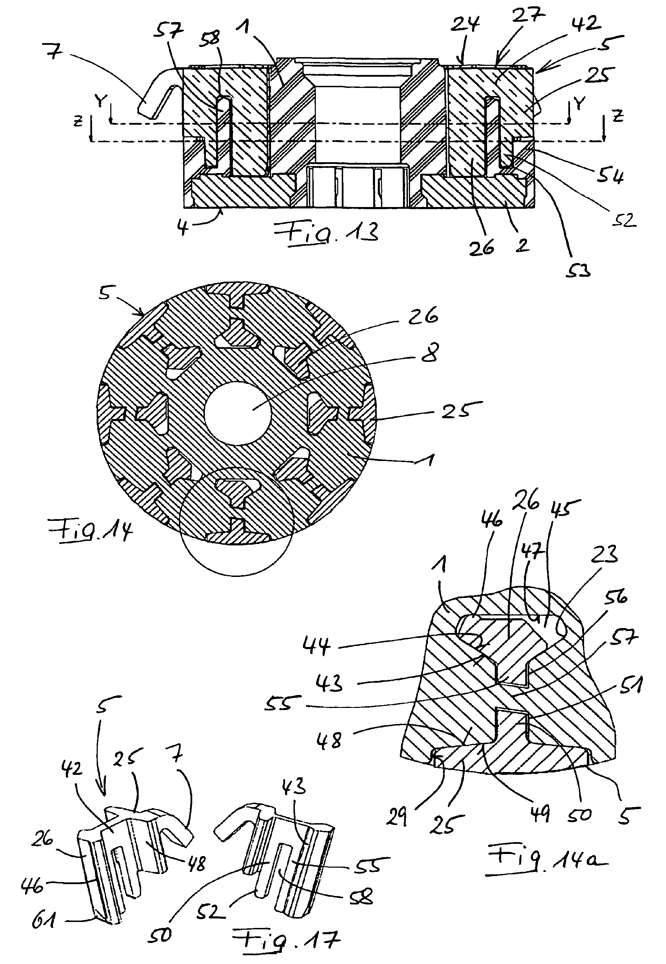

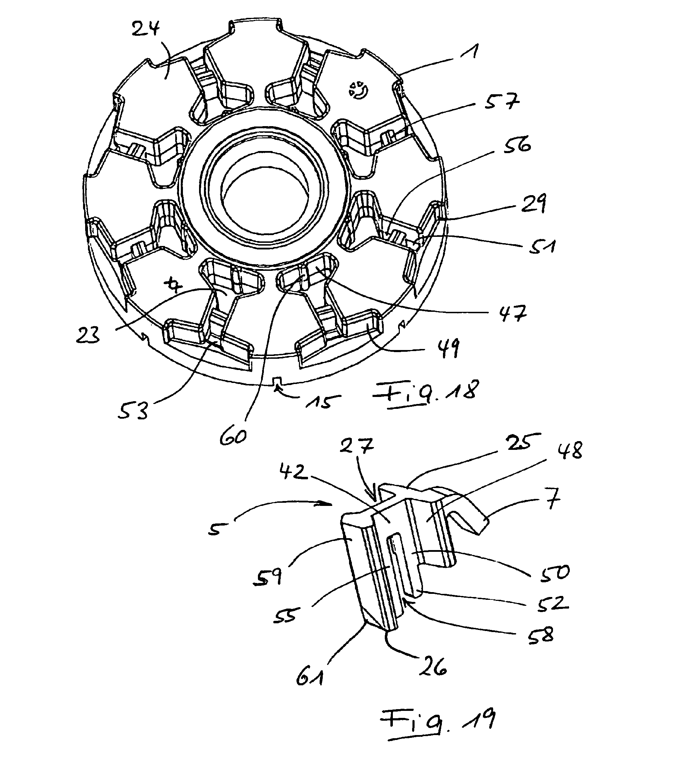

Die einzig relevante Abwandlung des Ausführungsbeispiels nach den Fig. 18 und 19 gegenüber der verstehend erläuterten Ausführungsform nach den Fig. 11 bis 17 besteht darin, dass hier nicht, um für einen Abstand zwischen der radialen Innenfläche 59 des Kontaktzapfens 26 und der gegenüberliegenden Oberfläche 47 der den Kontaktzapfen 26 aufnehmenden Aussparung 23 zu sorgen, radial innen an dem Kontaktzapfen 26 ein Wulst angeordnet ist, sondern dass sich vielmehr an der radial inneren Oberfläche 47 der Aussparung 23 ein erhabener Wulst 60 in axialer Richtung erstreckt. Dieser kann, wie in Fig. 18 veranschaulicht, an der radial inneren Oberfläche 47 der Aussparung 23 im Wesentlichen mittig (in Umfangsrichtung betrachtet) vorgesehen sein; dies ist indessen keineswegs zwingend, nachdem vielmehr auch eine außermittige Anordnung des betreffenden Wulstes zu ähnlichen Vorteilen führt. Erkennbar ist in Fig. 19 auch noch eine Abschrägung 61 an einer der beiden unteren inneren Ecken des Kontaktzapfens 26 (vgl. auch Fig. 17), der dessen Einsetzen in die Aussparung 23 und somit die Montage des betreffenden Leitersegments 5 erleichtert. In zweckmäßiger Abwandlung können derartige Abschrägungen 61 auch im Bereich der beiden inneren unteren Ecken des Kontaktzapfens 26 vorgesehen sein. Auch im Bereich der äußeren unteren Ecken des Kontaktzapfens 26 ist eine solche, die Montage der Leitersegmente 5 erleichternde Abschrägung 61 möglich.

## Patentansprüche

1. Verfahren zur Herstellung eines einen isolierenden Trägerkörper (1), eine Mehrzahl von Kohlenstoffsegmenten (2) und eine Mehrzahl von mit diesen elektrisch leitend verbundenen Leitersegmenten (5) umfassenden Plankommutators für eine dynamoelektrische Maschine, wobei die Kohlenstoffsegmente eine im wesentlichen ebene Bürstenlauffläche (4) definieren und die Leitersegmente jeweils einen Rotorwicklungsanschluss (6) aufweisen,
umfassend die folgenden Schritte:
Bereitstellen einer Kohlenstoffringscheibe (14); Anformen des Trägerkörpers (1) an die Kohlenstoffringscheibe durch Anspritzen von Kunststoffmaterial an diese dergestalt, dass der Trägerkörper radial außen, radial innen sowie an der der Bürstenlauffläche gegenüberliegenden Stirnseite (13) der Kohlenstoffringscheibe form- und stoffschlüssig an dieser anliegt;
Einbringen von Aussparungen (23) in den Trägerkörper, die sich von der der Bürstenlauffläche gegenüberliegenden Oberfläche (24) des Trägerkörpers bis zu der der Bürstenlauffläche gegenüberliegenden Oberfläche (19) der Kohlenstoffsegmente (2) bzw. der Kohlenstoffringscheibe (14) erstrecken;
Anbringen der Leitersegmente (5) an dem Trägerkörper dergestalt, dass jeweils ein Kontaktzapfen (26) der Leitersegmente eine der Aussparungen durchdringt und an seinem freien Ende die der Bürstenlauffläche gegenüberliegende Oberfläche (19) der Kohlenstoffsegmente (2) bzw. der Kohlenstoffringscheibe (14) kontaktiert; Vereinzeln der Kohlenstoffringscheibe (14) zu gegeneinander isolierten Kohlenstoffsegmenten (2).

2. Verfahren nach Anspruch 1, **dadurch gekennzeichnet, dass** das Vereinzeln der Kohlenstoffringscheibe (14) zu isolierten Kohlenstoffsegmenten (2) bereits vor dem Anbringen der Leitersegmente (5) an dem Trägerkörper (1) erfolgt.

3. Verfahren nach Anspruch 1 oder Anspruch 2, **dadurch gekennzeichnet, dass** das Einbringen der Aussparungen (23) in den Trägerkörper (1) bereits beim Formen des Trägerkörpers erfolgt.

4. Verfahren nach einem der Ansprüche 1 bis 3, **dadurch gekennzeichnet, dass** das die Kohlenstoffringscheibe (14) und den daran angeformten Trägerkörper (1) umfassende Zwischenprodukt vor dem Anbringen der Leitersegmente (5) einer technischen Alterung, insbesondere einer thermischen Alterung unterzogen wird.

5. Verfahren nach einem der Ansprüche 1 bis 4, **dadurch gekennzeichnet, dass** das die Kohlenstoffringscheibe (14), den Trägerkörper (1), die Leitersegmente (5) und ggf. ein Kontaktierungsmittel (35) umfassende Zwischenprodukt wärmebehandelt wird, um beständige, stabile, elektrische Verbindungen zwischen der Kohle und den Leitersegmenten zu sichern.

6. Verfahren nach einem der Ansprüche 1 bis 5, **dadurch gekennzeichnet, dass** die Kohlenstoffringscheibe (14) im Bereich ihres äußeren und/oder ihres inneren Umfangsrandes (10, 12) gestuft profiliert und/oder gezahnt ist.

7. Verfahren nach einem der Ansprüche 1 bis 6, **dadurch gekennzeichnet, dass** ein Kontaktierungsmittel (35), insbesondere Lot oder ein elektrisch leitender Kleber, in die Aussparungen (23) eingebracht wird, und zwar bevorzugt vor dem Anbringen der Leitersegmente (5) an dem Trägerkörper (1).

8. Verfahren nach einem der Ansprüche 1 bis 7, **dadurch gekennzeichnet, dass** nach dem Anbringen der Leitersegmente (5) an dem Trägerkörper (1) die Aussparungen (23) zumindest teilweise mit einem Schutz- und/oder Dichtmittel (41) verfüllt werden.

9. Verfahren nach einem der Ansprüche 1 bis 8, **dadurch gekennzeichnet, dass** die Kontaktzapfen (26) der Leitersegmente (5) mit ihren Stirnflächen (28) die der Bürstenlauffläche gegenüberliegende Oberfläche (19) der Kohlenstoffsegmente (2) bzw. der Kohlenstoffringscheibe (14) kontaktieren, wobei die Kohlenstoffringscheibe (14) an ihrer der Bürstenlauffläche (4) gegenüberliegenden Stirnseite (13) eine Ringnut (20) aufweist.

10. Verfahren nach einem der Ansprüche 1 bis 8, **dadurch gekennzeichnet, dass** die Kohlenstoffringscheibe (14) an ihrer der Bürstenlauffläche gegenüberliegenden Stirnseite (13) stutzenförmige Vorsprünge (36) aufweist, in die die Kontaktzapfen (26) mit ihren freien Enden eindringen.

11. Plankommutator, hergestellt nach dem Verfahren nach einem der Ansprüche 1 bis 10, umfassend einen isolierenden Trägerkörper (1), eine Mehrzahl von gegeneinander isolierten Kohlenstoffsegmenten (2) und eine Mehrzahl von mit diesen elektrisch leitend verbundenen Leitersegmenten (5), wobei die Kohlenstoffsegmente eine im wesentlichen ebene Bürstenlauffläche (4) definieren, die Leitersegmente jeweils einen Rotorwicklungsanschluss (6) aufweisen und der Trägerkörper radial außen, radial innen sowie an der der Bürstenlauffläche gegenüberliegenden Stirnseite (13) der Kohlenstoffsegmente form- und stoffschlüssig an diesen anliegt und Aussparungen (23) aufweist, die sich von der der Bürstenlauffläche gegenüberliegenden Oberfläche (24) des Trägerkörpers bis zu der der Bürstenlauffläche gegenüberliegenden Oberfläche (19) der Kohlenstoffsegmente erstrecken, wobei weiterhin jeweils ein Kontaktzapfen (26) der Leitersegmente eine der Aussparungen durchdringt und an seinem freien Ende die der Bürstenlauffläche gegenüberliegende Oberfläche der Kohlenstoffsegmente kontaktiert.

12. Plankommutator nach Anspruch 11, **dadurch gekennzeichnet, dass** die Kontaktzapfen (26) die Querschnitte der zugeordneten Aussparungen (23) jeweils nur teilweise ausfüllen.

13. Plankommutator nach Anspruch 11 oder Anspruch 12, **dadurch gekennzeichnet, dass** die Kontaktzapfen (26) einen polygonalen Querschnitt aufweisen und bevorzugt längs Kanten (32) an der inneren Oberfläche der jeweils zugeordneten Aussparung (23) anliegen.

14. Plankommutator nach einem der Ansprüche 11 bis 13, **dadurch gekennzeichnet, dass** die Leitersegmente (5) jeweils benachbart zu dem Rotorwicklungsanschluss (6) eine in einer Tasche (29) des Trägerkörpers (1) aufgenommene Basis (25) aufweisen, wobei die Basis (25) der Leitersegmente (5) und die jeweils zugeordnete Tasche (29) bevorzugt formschlüssig ineinandergreifen, insbesondere indem die Taschen (29) einen schwalbenschwanzförmigen Querschnitt aufweisen, wobei weiter bevorzugt die Querschnittsfläche der Basis (25) in einer zur Kommutatorachse (3) senkrechten Ebene größer ist als die Querschnittsfläche des Kontaktzapfens (26).

15. Plankommutator nach Anspruch 14, **dadurch gekennzeichnet, dass** die Taschen (29) Einstiche (31) mit einem radial innen angeordneten tangentialen Abschnitt sowie zwei radialen Abschnitten aufweisen.

16. Plankommutator nach einem der Ansprüche 14 oder 15, **dadurch gekennzeichnet, dass** jeweils der Kontaktzapfen (26) des Leitersegments (5) mit dessen Basis (25) über ein Brückenteil (27) verbunden ist, wobei die Brückenteile (27) bevorzugt im Wesentlichen in einer zur Kommutatorachse (3) senkrechten Ebene verlaufen, wobei weiter bevorzugt die Brückenteile (27) in Vertiefungen (33) aufgenommen sind, die sich an der der Bürstenlauffläche (4) gegenüberliegenden Stirnseite (24) des Trägerkörpers (1) jeweils von einer Tasche (29) zu einer zugeordneten Aussparung (23) erstrecken.

17. Plankommutator nach Anspruch 16, **dadurch gekennzeichnet, dass** die Brückenteile (27) jeweils in Form eines Verbindungsstegs (42) ausgeführt sind, der in Umfangsrichtung schmaler ausgeführt ist als die Basis (25) und der Kontaktzapfen (26), wobei die Basis und der Kontaktzapfen beidseits des Verbindungsstegs mit Anlageflächen (48; 43) an korrespondierenden Stützflächen (49; 44) der zugeordneten Tasche (29) bzw. Aussparung (23) des Trägerkörpers (1) anliegen und wobei bevorzugt die korrespondierenden Stütz- und Anlageflächen (49, 44; 48, 43) paarweise in Richtung auf den Verbindungssteg (42) keilförmig konvergieren.

18. Plankommutator nach einem der Ansprüche 14 bis 17, **dadurch gekennzeichnet, dass** radial innen an der Basis (25) eine Rippe (50) angeformt ist, die in axialer Richtung auf die Bürstenlauffläche (4) gegenüber der Basis vorspringt, wobei der entsprechende axiale Fortsatz (52) dergestalt in eine zugeordnete Aussparung (53) des Trägerkörpers (1) eingreift, dass er radial außen von dem Trägerkörper überdeckt ist.

19. Plankommutator nach einem der Ansprüche 14 bis 18, **dadurch gekennzeichnet, dass** radial außen an dem Kontaktzapfen (26) eine Rippe (55) angeformt ist, die in eine korrespondierende Kehle (56) des Trägerkörpers (1) eingreift und sich bevorzugt im Wesentlich über die gesamte axiale Höhe des Kontaktzapfens erstreckt.

20. Plankommutator nach einem der Ansprüche 14 bis 19, **dadurch gekennzeichnet, dass** der Rotorwicklungsanschluss (6) an der Basis (25) in Umfangsrichtung außermittig angeordnet ist.

21. Plankommutator nach einem der Ansprüche 11 bis 20, **dadurch gekennzeichnet, dass** die Kontaktzapfen mit ihren Stirnflächen (28) die der Bürstenlauffläche gegenüberliegende Oberfläche (13) der Kohlenstoffsegmente kontaktieren oder endseitig angeordnete, verjüngte Kontaktspitzen (38) aufweisen, die in an den Kohlenstoffsegmenten (2) an deren der Bürstenlauffläche (4) gegenüberliegenden Stirnseiten (19) angeordnete stutzenförmige Vorsprünge (26) eindringen.

22. Plankommutator nach einem der Ansprüche 11 bis 21, **dadurch gekennzeichnet, dass** der Kontaktzapfen (26) radial innen einen sich im Wesentlichen in axialer Richtung erstreckenden erhabenen Wulst (46) aufweist, der an der gegenüberliegenden Oberfläche (47) der den Kontaktzapfen aufnehmenden Aussparung (23) anliegt.

23. Plankommutator nach einem der Ansprüche 11 bis 21, **dadurch gekennzeichnet, dass** die Oberfläche (47) der den Kontaktzapfen (26) aufnehmenden Aussparung (23) radial innen einen sich im Wesentlichen in axialer Richtung erstreckenden erhabenen Wulst (60) aufweist, an dem der Kontaktzapfen mit seiner gegenüberliegenden Oberfläche (59) anliegt.

## Claims

1. A method for producing a flat commutator for a dynamoelectric machine, which commutator comprises an insulating support body (1), a plurality of carbon segments (2) and a plurality of conductor segments (5) connected electrically conductively therewith, wherein the carbon segments define a substantially plane brush running surface (4) and the conductor segments each have a rotor-winding terminal (6), the method comprising the following steps:
preparation of an annular carbon disk (14);
molding of the support body (1) onto the annular carbon disk by injection-molding plastic material thereon in such a way that the support body bears interlockingly and frictionally thereon in radially outward position and radially inward position as well as on the end face (13) of the annular carbon disk opposite the brush running surface;
creation, in the support body, of openings (23) that extend from a surface (24) of the support body opposite the brush running surface to a surface (19) of the carbon segments (2) or of the annular carbon disk (14) opposite the brush running surface;
mounting of the conductor segments (5) on the support body in such a way that a contact pin (26) of the conductor segments passes respectively through one of the openings and at its free end contacts the surface (19) of the carbon segments (2) or of the annular carbon disk (14) opposite the brush running surface; and
separation of the annular carbon disk (14) into carbon segments (2) insulated from one another.

2. A method according to claim 1, wherein the separation of the annular carbon disk (14) into insulated carbon segments (2) already takes place before the conductor segments (5) are mounted on the support body (1).

3. A method according to claim 1 or claim 2, wherein the creation of the openings (23) in the support body (1) already takes place during molding of the support body.

4. A method according to one of the claims 1 to 3, wherein the intermediate product comprising the annular carbon disk (14) and the support body (1) molded thereon is subjected before mounting of the conductor segments (5) to technical aging, especially thermal aging.

5. A method according to one of the claims 1 to 4, wherein the intermediate product comprising the annular carbon disk (14), the support body (1), the conductor segments (5) and if applicable a contacting substance (35) is heat-treated, in order to ensure durable, stable electrical connections between the carbon and the conductor segments.

6. A method according to one of the claims 1 to 5, wherein the annular carbon disk (14) is profiled in steps and/or is toothed in the region of its outer and/or of its inner circumferential rim (10, 12).

7. A method according to one of the claims 1 to 6, wherein a contacting substance (35), especially solder or an electrically conductive adhesive, is introduced into the openings (23), and especially preferably, in fact, before the conductor segments (5) are mounted on the support body (1).

8. A method according to one of the claims 1 to 7, wherein the openings (23) are filled, after the conductor segments (5) have been mounted on the support body (1), at least partly with a protective and/or sealing substance (41).

9. A method according to one of the claims 1 to 8, wherein the contact pins (26) of the conductor segments (5) contact the surface (19) of the carbon segments (2) or of the annular carbon disk (14) opposite the brush running surface with their end faces (28), wherein the annular carbon disk (14) is provided on its end face (13) opposite the brush running surface (4) with an annular slot (20).

10. A method according to one of the claims 1 to 8, **characterized in that** the annular carbon disk (14) is provided on its end face (13) opposite the brush running surface with socket-like projections (36), into which the contact pins (26) penetrate with their free ends.

11. A flat commutator, manufactured according to the process according to one of the claims 1 to 10, comprising an insulating support body (1), a plurality of carbon segments (2) insulated from one another and a plurality of conductor segments (5) connected electrically conductively therewith, wherein the carbon segments define a substantially plane brush running surface (4), the conductor segments respectively have a rotor-winding terminal (6), and the support body bears interlockingly and frictionally thereon in radially outward and radially inward position as well as on the end face (13) of the carbon segments opposite the brush running surface and is provided with openings (23) that extend from a surface (24) of the support body opposite the brush running surface to a surface (19) of the carbon segments opposite the brush running surface, wherein furthermore a contact pin (26) of the conductor segments passes respectively through one of the openings and at its free end contacts the surface of the carbon segments opposite the brush running surface.

12. A flat commutator according to claim 11, wherein the contact pins (26) respectively fill the cross sections of the associated openings (23) only partly.

13. A flat commutator according to claim 11 or claim 12, wherein the contact pins (26) have a polygonal cross section and preferably bear along edges (32) on the inner surface of the respective associated opening (23).

14. A flat commutator according to one of the claims 11 to 13, wherein the conductor segments (5) are respectively provided adjacent to the rotor winding terminal (6) with a base (25) received in a pocket (29) of the support body (1), wherein the base (25) of the conductor segments (5) and the respective associated pocket (29) preferably engage interlockingly in one another, especially by the fact that the pocket (29) has a dovetailed type of cross section, wherein further preferably the cross-sectional area of the base (25) is larger in a plane perpendicular to the commutator axis (3) than the cross-sectional area of the contact pin (26).

15. A flat commutator according to claim 14, wherein the pockets (29) are provided with an incision (31) having a tangential portion disposed in radially inward position as well as two radial portions.

16. A flat commutator according to one of the claims 14 or 15, wherein the contact pin (26) of the conductor segment (5) is respectively joined with the base (25) thereof via a bridging part (27), wherein the bridging parts (27) run substantially in a plane perpendicular to the commutator axis (3), wherein further preferably the bridging parts (27) are received in recesses (33), which extend on the end face (24) of the support body (1) opposite the brush running surface (4) respectively from a pocket (29) to an associated opening (23).

17. A flat commutator according to claim 16, wherein the bridging parts (27) respectively have the form of a connecting web (42), which is narrower in circumferential direction than the base (25) and the contact pin (26), wherein on both sides of the connecting web the base and the contact pin bear with bearing faces (48; 43) on corresponding bracing faces (49; 44) of the associated pocket (29) or opening (23) of the support body (1) and wherein the corresponding bracing and bearing faces (49, 44; 48, 43) converge in pairs in the form of wedges in the direction of the connecting web (42).

18. A flat commutator according to one of the claims 14 to 17, wherein a rib (50) projecting in the axial direction toward the brush running surface (4) opposite the base is molded in a radially inside position onto the base (25), wherein the corresponding axial extension (52) engages in an associated opening (53) of the support body (1) in such a way that it is overlapped in radially outward position by the support body.

19. A flat commutator according to one of the claims 14 to 18, wherein a rib (55) that engages in a corresponding groove (56) of the support body (1) is molded in a radially outward position onto the contact pin (26) and preferably extends substantially over the entire axial height of the contact pin.

20. A flat commutator according to one of the claims 14 to 19, wherein the rotor winding terminal (6) is disposed on the base (25) such that it is off-centered in circumferential direction.

21. A flat commutator according to one of the claims 11 to 20, wherein the contact pins contact the surface (13) of the carbon segments opposite the brush running surface with their end faces (28) or are provided with tapered contact tips (38), which are disposed at their ends and penetrate into socket-like projections (26) disposed on the carbon segments (2) on the end faces (19) thereof opposite the brush running surface (4).

22. A flat commutator according to one of the claims 11 to 21, wherein the contact pin (26) is provided in a radially inside position with a raised ridge (46), which extends substantially in axial direction and bears on the opposite surface (47) of the opening (23) receiving the contact pin.

23. A flat commutator according to one of the claims 11 to 21, wherein the surface (47) of the opening (23) receiving the contact pin (26) is provided in a radially inside position with a raised ridge (60), which extends substantially in an axial direction and on which the contact pin bears with its opposite surface (59).

## Revendications

1. Procédé pour la fabrication d'un collecteur plan comprenant un corps porteur (1) isolant, une pluralité de segments de carbone (2) et une pluralité de segments conducteurs (5) reliés de manière électroconductrice à ceux-ci pour une machine dynamoélectrique, les segments de carbone définissant une surface de glissement de balais (4) sensiblement plane et les segments conducteurs présentant respectivement un raccord d'enroulement de rotor (6), comprenant les étapes suivantes :
mise à disposition d'un disque annulaire de carbone (14) ;
moulage du corps porteur (1) sur le disque annulaire de carbone par moulage par injection d'une matière plastique sur celui-ci de manière à ce que le corps porteur repose, radialement à l'extérieur, radialement à l'intérieur ainsi que du côté frontal (13) situé en vis-à-vis de la surface de glissement de balais du disque annulaire de carbone, par conjugaison de formes et de substances contre celui-ci ;
aménagement d'évidements (23) dans le corps porteur, lesquels s'étendent depuis la surface (24) située en vis-à-vis de la surface de glissement de balais du corps porteur jusqu'à la surface (19) située en vis-à-vis de la surface de glissement de balais des segments de carbone (2) ou du disque annulaire de carbone (14) ;
application des segments conducteurs (5) sur le corps porteur de manière à ce que respectivement une cheville de contact (26) des segments conducteurs pénètre dans un des évidements et entre en contact, au niveau de son extrémité libre, avec la surface (19) située en vis-à-vis de la surface de glissement de balais des segments de carbone (2) ou du disque annulaire de carbone (14) ;
séparation du disque annulaire de carbone (14) en des segments de carbone (2) isolés les uns par rapport aux autres.

2. Procédé selon la revendication 1, **caractérisé en ce que** la séparation du disque annulaire de carbone (14) en segments de carbone (2) isolés s'effectue déjà avant l'application des segments conducteurs (5) sur le corps porteur (1).

3. Procédé selon la revendication 1 ou la revendication 2, **caractérisé en ce que** l'aménagement des évidements (23) dans le corps porteur (1) s'effectue déjà lors du moulage du corps porteur.

4. Procédé selon l'une des revendications 1 à 3, **caractérisé en ce que** le produit intermédiaire, comprenant le disque annulaire de carbone (14) et le corps porteur (1) moulé sur celui-ci, est soumis à un vieillissement technique, en particulier un vieillissement thermique, avant l'application des segments conducteurs (5).

5. Procédé selon l'une des revendications 1 à 4, **caractérisé en ce que** le produit intermédiaire, comprenant le disque annulaire de carbone (14), le corps porteur (1), les segments conducteurs (5) et le cas échéant un moyen d'établissement de contact (35), est soumis à un traitement thermique afin de garantir des liaisons électriques constantes, solides, entre le charbon et les segments conducteurs.

6. Procédé selon l'une des revendications 1 à 5, **caractérisé en ce que** le disque annulaire de carbone (14) est profilé de manière étagée et/ou dentelé dans la zone de son bord périphérique (10, 12) extérieur et/ou intérieur.

7. Procédé selon l'une des revendications 1 à 6, **caractérisé en ce qu'**un moyen d'établissement de contact (35), en particulier un alliage d'apport ou un adhésif électro-conducteur, est introduit dans les évidements (23), à savoir de préférence avant l'application des segments conducteurs (5) sur le corps porteur (1).

8. Procédé selon l'une des revendications 1 à 7, **caractérisé en ce qu'**après l'application des segments conducteurs (5) sur le corps porteur (1), les évidements (23) sont au moins partiellement remplis avec un moyen de protection et/ou d'étanchéité (41).

9. Procédé selon l'une des revendications 1 à 8, **caractérisé en ce que** les chevilles de contact (26) des segments conducteurs (5) entrent en contact, avec leurs surfaces frontales (28), avec la surface (19) située en vis-à-vis de la surface de glissement de balais des segments de carbone (2) ou du disque annulaire de carbone (14), le disque annulaire de carbone (14) présentant une rainure annulaire (20) sur son côté frontal (13) situé en vis-à-vis de la surface de glissement de balais (4).

10. Procédé selon l'une des revendications 1 à 8, **caractérisé en ce que** le disque annulaire de carbone (14) présente, sur son côté frontal (13) situé en vis-à-vis de la surface de glissement de balais, des saillies (36) en forme de tubulure dans lesquelles les chevilles de contact (26) pénètrent avec leurs extrémités libres.

11. Collecteur plan fabriqué selon le procédé selon l'une des revendications 1 à 10, comprenant un corps porteur (1) isolant, une pluralité de segments de carbone (2) isolés les uns par rapport aux autres et une pluralité de segments conducteurs (5) reliés de manière électroconductrice avec ceux-ci, les segments de carbone définissant une surface de glissement de balais (4) sensiblement plane, les segments conducteurs présentant respectivement un raccord d'enroulement de rotor (6) et le corps porteur reposant, radialement à l'extérieur, radialement à l'intérieur ainsi que du côté frontal (13) situé en vis-à-vis de la surface de glissement de balais des segments de carbone, par conjugaison de formes et de substance contre ceux-ci et présentant des évidements (23) qui s'étendent depuis la surface (24) située en vis-à-vis de la surface de glissement de balais du corps porteur jusqu'à la surface (19) située en vis-à-vis de la surface de glissement de balais des segments de carbone, respectivement une cheville de contact (26) des segments conducteurs pénétrant par ailleurs dans l'un des évidements et entrant en contact, au niveau de son extrémité libre, avec la surface située en vis-à-vis de la surface de glissement de balais des segments de carbone.

12. Collecteur plan selon la revendication 11, **caractérisé en ce que** les chevilles de contact (26) remplissent respectivement seulement partiellement les sections transversales des évidements (23) associés.

13. Collecteur plan selon la revendication 11 ou la revendication 12, **caractérisé en ce que** les chevilles de contact (26) présentent une section transversale polygonale et reposent de préférence le long d'arêtes (32) contre la surface intérieure de l'évidement (23) respectivement associé.

14. Collecteur plan selon l'une des revendications 11 à 13, **caractérisé en ce que** les segments conducteurs (5) présentent, respectivement au voisinage du raccord d'enroulement de rotor (6), une base (25) réceptionnée dans une poche (29) du corps porteur (1), la base (25) des segments conducteurs (5) et la poche (29) respectivement associée se mettant de préférence en prise l'une avec l'autre par conjugaison de formes en particulier **en ce que** les poches (29) présentent une section transversale en forme de queue d'aronde, la surface de section transversale de la base (25) étant par ailleurs de préférence plus grande, dans un plan perpendiculaire à l'axe du collecteur (3), que la surface de section transversale de la cheville de contact (26).

15. Collecteur plan selon la revendication 14, **caractérisé en ce que** les poches (29) présentent des piqûres (31) avec un tronçon tangentiel disposé radialement à l'intérieur ainsi que deux tronçons radiaux.

16. Collecteur plan selon l'une des revendications 14 ou 15, **caractérisé en ce que** respectivement la cheville de contact (26) du segment conducteur (5) est reliée à la base (25) de celui-ci via un élément de pont (27), les éléments de pont (27) s'étendant de préférence sensiblement dans un plan perpendiculaire à l'axe du collecteur (3), les éléments de pont (27) étant en outre de préférence réceptionnés dans des creux (33) qui s'étendent sur le côté frontal (24) situé en vis-à-vis de la surface de glissement de balais (4) du corps porteur (1), respectivement à partir d'une poche (29) jusqu'à un évidement (23) associé.

17. Collecteur plan selon la revendication 16, **caractérisé en ce que** les éléments de pont (27) sont respectivement réalisés sous la forme d'une traverse (42), laquelle est réalisée de manière plus étroite en direction périphérique que la base (25) et la cheville de contact (26), la base et la cheville de contact reposant des deux côtés de la traverse, avec des surfaces de contact (48 ; 43), contre des surfaces d'appui (49 ; 44) correspondantes de la poche associée (29) ou de l'évidement (23) du corps porteur (1), et les surfaces d'appui et de contact (49, 44 ; 48, 43) correspondantes convergeant de préférence par paires, de manière cunéiforme, en direction de la traverse (42).

18. Collecteur plan selon l'une des revendications 14 à 17, **caractérisé en ce qu'**une nervure (50) est moulée radialement à l'intérieur sur la base (25), laquelle est en saillie, en direction axiale sur la surface de glissement de balais (4), par rapport à la base, le prolongement (52) axial correspondant étant en prise dans un évidement (53) associé du corps porteur (1) de manière à être recouvert radialement à l'extérieur par le corps porteur.

19. Collecteur plan selon l'une des revendications 14 à 18, **caractérisé en ce qu'**une nervure (55) est moulée radialement à l'extérieur sur la cheville de contact (26), laquelle est en prise avec une cannelure (56) correspondante du corps porteur (1) et s'étend de préférence sensiblement sur toute la hauteur axiale de la cheville de contact.

20. Collecteur plan selon l'une des revendications 14 à 19, **caractérisé en ce que** le raccord d'enroulement de rotor (6) est disposé sur la base (25), de manière excentrée, en direction périphérique.

21. Collecteur plan selon l'une des revendications 11 à 20, **caractérisé en ce que** les chevilles de contact entrent en contact, avec leurs surfaces frontales (28), avec la surface (13) située en vis-à-vis de la surface de glissement de balais des segments de carbone ou bien présentent des pointes de contact (38) s'amenuisant disposées du côté d'extrémité, lesquelles pénètrent dans des saillies (26) en forme de tubulure disposées au niveau des segments de carbone (2), sur les côtés frontaux (19) de ceux-ci situés en vis-à-vis de la surface de glissement de balais (4).

22. Collecteur plan selon l'une des revendications 11 à 21, **caractérisé en ce que** la cheville de contact (26) présente radialement à l'intérieur un bourrelet (46) en relief s'étendant sensiblement en direction axiale, lequel repose contre la surface (47) située en vis-à-vis de l'évidement (23) réceptionnant la cheville de contact.

23. Collecteur plan selon l'une des revendications 11 à 21, **caractérisé en ce que** la surface (47) de l'évidement (23) réceptionnant la cheville de contact (26) présente radialement à l'intérieur un bourrelet (60) en relief s'étendant sensiblement en direction axiale contre lequel repose la cheville de contact avec sa surface (59) située en vis-à-vis.
